# EUROPEAN PATENT SPECIFICATION

(11) **EP 1 577 899 B1**
(45) Date of publication and mention of the grant of the patent: **10.04.2013**
(21) Application number: 03780793.0
(22) Date of filing: 16.12.2003
(51) Int. Cl.: H05H 3/02, H05H 6/00

(54) **DEUTERON GENERATING TARGET AND DEUTERON GENERATING TARGET APPARATUS COMPRISING THE SAME**
TARGET ZUR ERZEUGUNG VON DEUTERONEN UND TARGET-VORRICHTUNG ZUR ERZEUGUNG VON DEUTERONEN ENTHALTEND DAS TARGET
CIBLE POUR LA GENERATION DE DEUTERONS ET DISPOSITIF CIBLE POUR LA GENERATION DE DEUTERONS COMPRENANT LADITE CIBLE

(30) Priority: 27.12.2002 JP 2002381327
(43) Date of publication of application: 21.09.2005
(73) Proprietor: HAMAMATSU PHOTONICS K.K., Hamamatsu-shi, Shizuoka-ken 435-8558 (JP)
(72) Inventor: TAKAHASHI, Hironori, Hamamatsu-shi, Shizuoka 435-8558 (JP); OKAZAKI, Shigetoshi, Hamamatsu-shi, Shizuoka 435-8558 (JP); OHSUKA, Shinji, Hamamatsu-shi, Shizuoka 435-8558 (JP)
(74) Representative: Frost, Alex John
(86) International application number: PCT/JP2003/016113
(87) International publication number: WO 2004/061865

(56) References cited:
- JP-U- 2 077 700
- US-A- 3 963 934
- US-A1- 2002 172 317
- IZUMI N ET AL: "Observation of neutron spectrum produced by fast deuterons via ultraintense laser plasma interactions" PHYSICAL REVIEW E (STATISTICAL, NONLINEAR, AND SOFT MATTER PHYSICS) APS THROUGH AIP USA, vol. 65, no. 3, March 2002 (2002-03), pages 036413/1-10, XP002465408 ISSN: 1063-651X

## Description

### TECHNICAL FIELD

The present invention relates to a deuteron generating target that generates deuterons by means of irradiation of a high-intensity laser beam, and a deuteron generating target apparatus including the deuteron generating target as a component.

### BACKGROUND ART

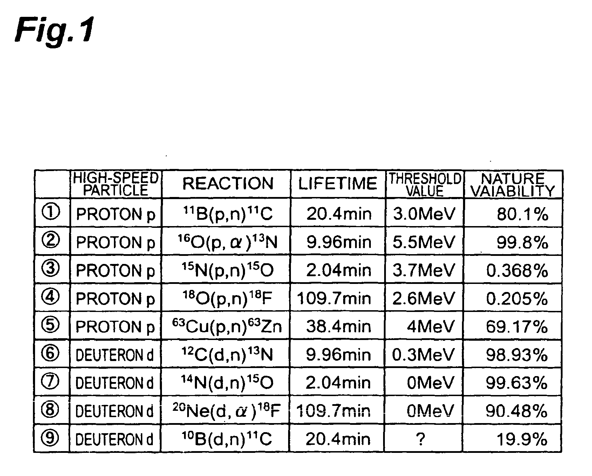

A PET (Positron Emission Tomography) is an apparatus such that a medical agent containing a short-lived radioactive isotope capable of emitting positrons is administered in vivo to image the disposition of the medical agent. The short-lived radioactive isotope for use in the PET is generated in such a manner that a high-speed proton or deuteron is collided with another atom. As a nuclear reaction generating such a short-lived radioactive isotope, for example, reactions shown in the table of Fig. 1 are known.

As shown in Fig. 1, in the nuclear reaction generating the short-lived radioactive isotope, a threshold value is lowered in employing deuterons rather than protons, which enables to generate short-lived radioactive isotopes efficiently.

Conventionally, a cyclotron has been employed as a deuteron generation apparatus, attached to the PET apparatus, for obtaining a high-speed deuteron. Referring to K. Nemoto et al., "Laser-triggered ion acceleration and table top isotope production", APPLIED PHYSICS LETTERS(US), American Institute of Physics 29 JANUARY 2001, VOL.78, No.5, pp.595-597, there is a disclosure of a method for generating a high-energy deuteron such that a high-speed laser beam is radiated to a film applied with a deuterated polystyrene on a reinforced polyester film to thus generate a high-energy deuteron.
US-A-2002/172,317 describes a deuteron generating target having those features set out in the precharacterizing portions of claims 1 and 2.

### DISCLOSURE OF THE INVENTION

After studying the foregoing prior art, the inventors et al. find out the following problems. Namely, the cyclotron has a problem that the apparatus size is large.

On the other hand, in accordance with a conventional method using a high-intensity laser beam, an apparatus for generating deuterons can be downsized. However, there is a problem that when a film applied with deuterated polystyrene is employed on a reinforced polyester film, deuterons are not discharged efficiently. That is, the inventors found that: in the conventional deuteron generating target, hydrogen is contained in reinforced polyester of a base material; when a high-intensity laser beam is irradiated to the target, a nucleus of hydrogen (proton), which is lighter in weight than that of deuterium (deuteron), is emitted forward, which makes it difficult to emit deuterons efficiently.

The present invention is made to solve the aforementioned problems, and it is an object to provide a deuteron generating target having a construction to generate deuterons efficiently, and a deuteron generating target apparatus including the deuteron generating target.

To achieve the aforementioned object, a deuteron generating target according to a first aspect of the present invention is defined in claim 1. The invention, in this aspect, comprises: a base film mainly composed of a halogen-containing compound; and an upper film provided on the base film and mainly composed of a deuterated organic compound.

In accordance with such a deuteron generating target, hydrogen is substituted by halogen in the base film having the halogen-containing compound as a main component. Therefore, when a high-intensity laser beam is irradiated thereto, a nucleus of hydrogen (proton), which is lighter than that of deuterium (deuteron), is never emitted forward, thereby emitting deuteron efficiently.

In addition, the above halogen-containing organic compound is preferably a fluorine substituted hydrocarbon. This is because when hydrogen in the base film is substituted by fluorine, a nucleus of hydrogen (proton), which is lighter than that of deuterium (deuteron), is never emitted forward, thereby emitting deuteron efficiently.

In accordance with a second aspect of the present invention there is provided a deuteron generating target in accordance with claim 2.

In accordance with such a deuteron generating target, plenty of deuterated organic compound can be impregnated inside of the porous film having a halogen-containing organic compound as a main component. Therefore, when the high-intensity laser beam is irradiated to the target, hydrogen in the base film is substituted by fluorine, a proton, which is lighter than that of deuteron, is never emitted forward, thereby emitting deuteron efficiently.

Also in this case, it is preferable that the above halogen-containing organic compound is a fluorine-substituted hydrocarbon. This is because when hydrogen in the porous film is substituted by fluorine, a nucleus of hydrogen (proton), which is lighter than that of deuterium (deuteron), is never emitted forward, thereby emitting deuteron efficiently.

Further, after studying earnestly the improvement of a deuteron generating target apparatus including the deuteron generating target having the aforementioned construction as a component, the inventors et al. found a problem that when a high-intensity laser beam is irradiated to a target in which deuterated polystyrene is applied on a reinforced polyester film, a hole may be opened in the reinforced polyester film, which is incapable of the reuse.

For this reason, a deuteron generating target apparatus according to the present invention comprises: a deuteron generating target having the aforementioned construction (deuteron generating target according to the invention); a holder; a laser source; and a driving mechanism. The holder holds the deuteron generating target on a predetermined surface. The laser source irradiates a laser beam to a predetermined area. Then, the driving mechanism displaces the deuteron target on the predetermined surface so as to change a relative position of the laser-beam irradiated area on the deuteron generating target with respect to the laser source.

In accordance with such a deuteron generating target apparatus, since the relative position of the deuteron generating target held on the predetermined surface by the holder to the laser source can be changed by the driving mechanism, the position of the laser irradiated area on the deuteron generating target may be displaced based on various aspects (aspects of coaxially, spirally and the like). Therefore, the same deuteron generating target can be used consecutively over a plurality of times.

The present invention will be more fully understood from the detailed description given hereinbelow and the accompanying drawings, which are given by way of illustration only and are not to be considered as limiting the present invention.

### BRIEF DESCRIPTION OF THE DRAWINGS

FIG. 1 is a table showing a various nuclear reactions of short-lived radioactive isotope;

Fig. 2 is a view showing a construction of a first embodiment of a deuteron generating target according to the present invention;

Fig. 3 is a view showing a construction of a second embodiment of a deuteron generating target according to the invention;
embodiment of a deuteron generating target according to the invention;

Fig. 4 is a view showing a construction of a third embodiment of a deuteron generating target according to the invention;

Fig. 5 is a view showing a construction of a fourth embodiment of a deuteron generating target according to the invention;

Fig. 6 is a view showing a main part of a manufacturing apparatus of the deuteron generating target according to the third embodiment;

Fig. 7 is a view showing a construction of a rotary deuteron generating target apparatus, as a first embodiment of a deuteron generating target apparatus according to the invention; and

Fig. 8 is a view showing a construction of a winding-up deuteron generating target apparatus, as a second embodiment of a deuteron generating target apparatus according to the present invention.

### BEST MODE OF CARRYING OUT THE INVENTION

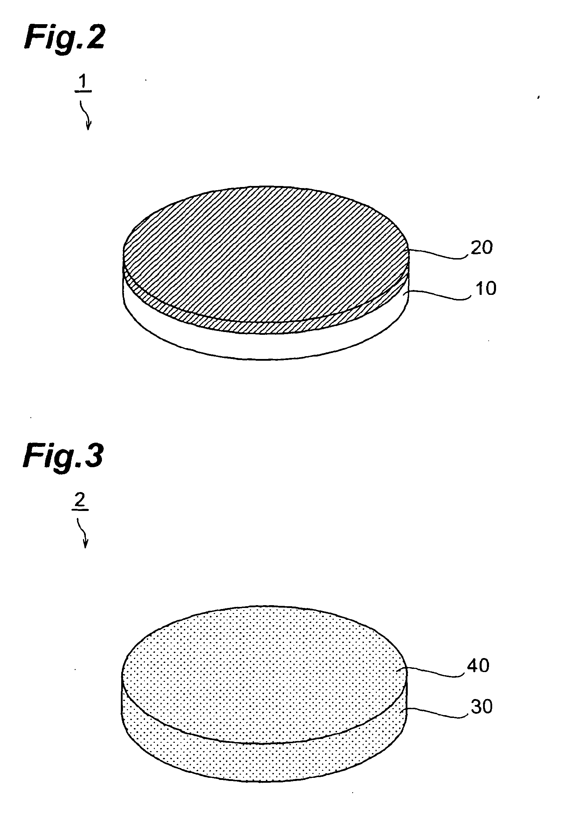

In the following, embodiments of a deuteron generating target and a deuteron generating apparatus including the same according to the present invention will be explained in detail with reference to Figs. 2-8. In the explanation of the drawings, the same elements will be denoted by the same reference symbols and these redundant descriptions will be omitted.

### (First Embodiment of Deuteron Generating Target)

Fig. 2 is a view showing a construction of a first embodiment of a deuteron generating target according to the present invention. A deuteron generating target 1 according to the first embodiment includes a base film 10 mainly comprised of a halogen-containing organic compound, and an upper film 20 of a deuterated organic compound, provided on the base film 10. Note that the deuteron generating target 1 according to the first embodiment has a thin, substantially disk configuration (or circular film shape) and that the halogen-containing organic compound constituting a base material (base film 10) is a fluorine-substituted hydrocarbon.

The halogen-containing organic compound constituting a main component of the above base film 10 means an organic compound containing halogen atoms such as fluorine, bromine, and chlorine. In addition, the above fluorine-substituted hydrocarbon means a hydrocarbon such that part or all of the hydrogen atoms are substituted by fluorine atoms. Here, as the halogen-containing organic compound (fluorine-substituted hydrocarbon), polytetrafluoroethylene (PTFE) (trade name: Polyflon TFE, Teflon TFE), polychlorotrifluoroethylene (PCTFE) (trade name: Diflon CTFE, Kel-F), copolymer of tetrafluoroethylene and hexafluoropropylene (FEP) (trade name: Neoflon FEP, Teflon FEP), polyvinylidene fluoride (PVDF) (trade name: KF polymer, Kynar), copolymer of tetrafluoroethylene and perfluoroalkoxyvinylether (trade name: Teflon PFA, Neoflon PFA) and so on are exemplified.

In addition, for the upper film 20 provided on the base film 10, for example, deuterated polystyrene is utilized as a deuterated organic compound.

Thus, the deuteron generating target 1 according to the first embodiment has a construction such that the base film 10 of, for example, polytetrafluoroethylene (trade name: Polyflon TFE, Teflon TFE) is employed as the base material, and that deuterated polystyrene and the like is applied on the base film 10 as the upper film 20. In this case, when the deuteron generating target is formed by only a thin film of the deuterated polystyrene, insufficient polymerization of the polystyrene cannot obtain a thin film with a high mechanical strength; as a result, it is difficult to obtain a deuteron generating target with a high mechanical strength. However, when the base film 10 of polytetrafluoroethylene is used for a substrate, and deuterated polystyrene and so on are applied on the base film 10 as the upper film 20, thereby obtaining the deuteron generating target 1 with a high mechanical strength.

Moreover, since the target is produced on the aforementioned base material with a high mechanical strength, the configuration of the deuteron generating target 1 can be easily changed by cutting or the like.

In the deuteron generating target according to the first embodiment, the base film 10 of polytetrafluoroethylene has a thickness of approximately 6µm, while the upper film of polystyrene to be applied has a thickness of approximately 1µm. Here, polytetrafluoroethylene is a polymer of CF2=CF2, not containing a hydrogen atom considered as a problem in reinforced polyester. Therefore, when a high-intensity laser beam is irradiated thereon, a nucleus of hydrogen (proton), which is lighter in weight than that of deuterium (deuteron), is never emitted forward, which enables to emit deuteron efficiently.

A method of manufacturing the deuteron generating target 1 according to the first embodiment shown in Fig. 2 will next be explained. It is noted that the manufacturing method is a case where polytetrafluoroethylene is employed as the base film 10, while deuterated polystyrene is employed as the upper film 20 provided on the base film 10.

The deuterated styrene can be purchased from, for example, Sigma-Aldrich Japan Corporation. When the deuterated styrene is polymerized by radical polymerization and the like, the deuterated polystyrene can be obtained.

Next, for example, the above deuterated polystyrene (upper film 20) is applied on the base film 10 of polytetrafluoroethylene (tetra-fluoroethylene resin, DuPont trade mark: Teflon) by spin coating or the like. In such a way, the deuteron generating target 1 having a laminated or stacked structure of the base film 10 of polytetrafluoroethylene and the upper film 20 of deuterated polystyrene and having a high mechanical strength can be obtained.

### (Second Embodiment of Deuteron Generating Target)

A construction of a deuteron generating target 2 according to a second embodiment will next be explained with reference to Fig. 3.

The deuteron generating target 2 according to the second embodiment employs as a base material a porous film 30 mainly composed of a halogen-containing organic compound, and a deuterated organic compound is impregnated in the whole porous film 30. Thus, the whole upper surface of the porous film 30 becomes a target area 40. Also in the second embodiment, the base material has a thin, substantially disk configuration (or circular film shape) and the above halogen-containing organic compound is a fluorine-substituted hydrocarbon.

The above porous film 30 having the halogen-containing as a main component can be obtained, for example, when polytetrafluoroethylene is processed in a porous, thin filter manner (film thickness: approximately 70µm). In addition, as an organic compound to be impregnated in the porous film 30, for example, deuterated polystyrene and the like is available. As such a porous film-like or membrane filter, a filter commercially traded as a PTFE membrane filter (for instance, a PTFE-type membrane filter from ADVANTEC CO., LTD.) may also be utilized. Since such a porous filter has a porosity of 70% or more, plenty of target material can be impregnated therein.

A method of manufacturing the deuteron generating target 2 according to the second embodiment shown in Fig. 3 will next be explained. It is noted that the manufacturing method is a case where polytetrafluoroethylene is employed as the porous film 30, while deuterated polystyrene is employed as an impregnant.

The deuterated polystyrene obtained similarly to the aforementioned first embodiment (Fig. 2) is first dissolved into a solvent. Specifically, toluene 1 ml is applied to the deuterated polystyrene 50 mg, which is shaken well in this situation to thereby dissolve the polystyrene completely.

Next, the deuterated polystyrene solution is extended on a Petri dish to be uniform. Then, when a porous membrane filter (PTFE-type membrane filter made by ADVANTEC CO., LTD.) is placed in the Petri dish, the deuterated polystyrene solution is impregnated in the porous membrane filter. At this time, when the Petri dish is well shaken, the solution can be impregnated in the porous membrane film uniformly.

Subsequently, the filter taken out from the inside of the Petri dish is expanded on a sheet of polytetrafluoroethylene (trade name: Teflon) in order to vaporize the toluene in the solvent. Thus, when polytetrafluoroethylene (trade name: Teflon) is utilized for the sheet, the filter can be easily removed since it is not stuck on the sheet. Then, in a condition sandwiched by a wrapping paper or a paper processed by polytetrafluoroethylene (trade name: Teflon), the filter is compressed by a press, and then wrinkles or cockles of the filter are extended and flattened.

As described above, the deuteron generating target 2 can be obtained, which is composed of the porous film 30 (base film) of polytetrafluoroethylene and the deuterated polystyrene impregnated in the porous film 30.

### (Third and Fourth Embodiments of Deuteron Generating Target)

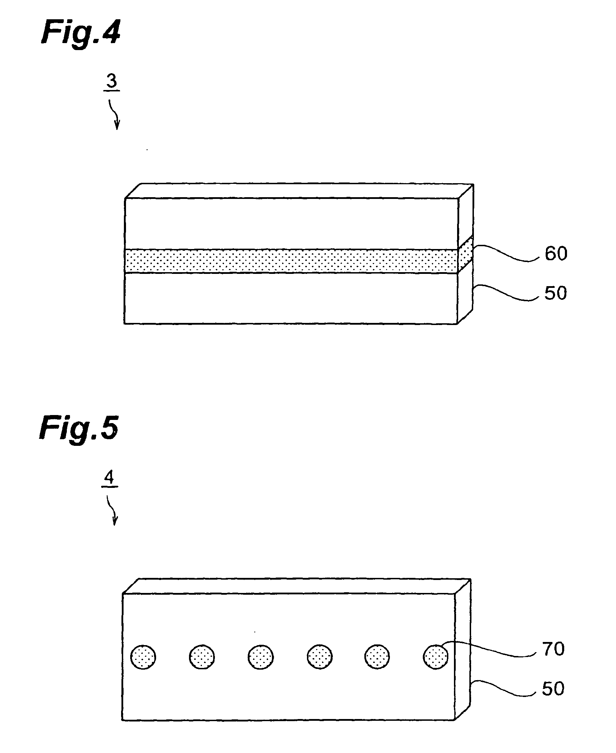

Constructions of deuteron generating targets 3-4 according to third and fourth embodiments will next be explained with reference to Figs. 4-5.

In both of the third and fourth embodiments, the deuteron generating targets 3-4 has as a base material a tape-like porous film 50 that has a halogen-containing organic compound such as fluorine-substituted hydrocarbon as a main component. Though an organic compound is impregnated at the central portion of the tape-like porous film 50 along the longitudinal direction, there is a difference in the impregnated area between the third and fourth embodiments. Namely, in the deuteron generating target 3 according to the third embodiment shown in Fig. 4, the deuterated organic compound is impregnated to the porous film 50 in a stripe-form, and thus a target area 60 is formed in a stripe-form. On the other hand, in the deuteron generating target 4 according to the fourth embodiment shown in Fig. 5, the deuterated organic compound is impregnated to the porous film 50 in a continuous spot-form spaced at a constant interval, and thus a target area 70 is formed in a continuous spot-form.

The porous film 50 having the halogen-containing as a main component can be obtained, for example, when polytetrafluoroethylene is processed into a porous membrane filter (film thickness: approximately 70µm). In addition, as an organic compound to be impregnated in the porous membrane filter, for example, deuterated polystyrene and the like are available. As such a porous membrane filter, a filter commercially traded as a PTFE membrane filter (for instance, a PTFE-type membrane filter from ADVANTEC CO., LTD.) may also be utilized. Since such a porous filter has a porosity of 70% or more, plenty of target material can be impregnated therein.

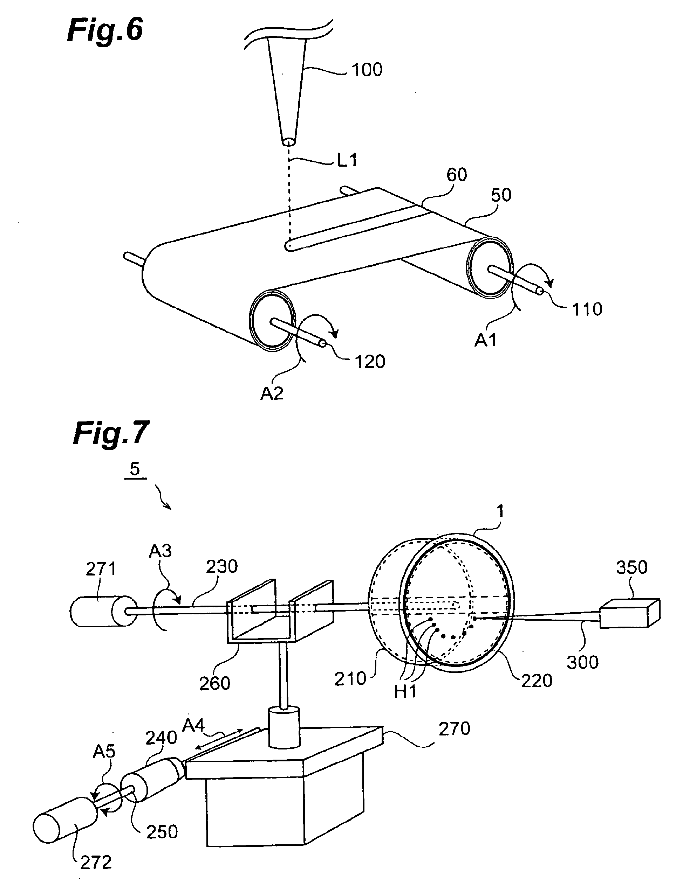

A method of manufacturing the deuteron generating target 3 will next be explained with reference to Fig. 6. Fig. 6 is a view showing a construction of an apparatus used for the manufacture of the deuteron generating target 3 according to the third embodiment.

In the apparatus shown in Fig. 6, one end of the tape-like, porous membrane filter 50 is rolled at a rotating shaft 120 on the feeding side, while the other end of the porous membrane filter 50 is fixed at a rotating shaft 110 on the drawing side. In this condition, when the rotating shaft 110 is rotated in the direction of arrow A1 by the driving mechanism, the rotating shaft 120 is driven in the direction of arrow A2 to be rotated, and the porous membrane filter 50 is rolled up from the rotating shaft 120 to the rotating shaft 110 sequentially. At this time, when an impregnant is dripped from a pipet 100 installed above the middle portion between the two rotating shafts 110, 120, a target area of an aspect corresponding to a traveling speed of the porous membrane filter 50, a dripping amount of the impregnant, and drip timing is formed. Note that a broken line L1 represents a path dripped by deuterated polystyrene.

For this, polytetrafluoroethylene (trade mark: Teflon) is available for the tape-shaped porous membrane filter 50, while the deuterated polystyrene dissolved by a solvent such as toluene is available for the dripped impregnant. Fig. 6 shows a process to manufacture the deuteron generating target 3 (third embodiment) having the stripe-shaped target area 60 shown in Fig. 4 by dripping continuously the impregnant. When the drip timing is set intermittently, the deuteron generating target 4 having a continuous-spots-shaped area 70 according to the fourth embodiment shown in Fig. 5 can be obtained.

Thus, in accordance with the deuteron generating targets 3-4 of the third and fourth embodiments, consumption of wasteful deuterated polystyrene can be suppressed in such a manner that the deuterated polystyrene is applied over only the area irradiated by the laser beam, which enables to use a target material efficiently.

As stated above, in accordance with the deuteron generating targets 1-4 of the first to fourth embodiments, in the base material (base film 10 and/or porous film 50) having the halogen-containing organic compound such as polytetrafluoroethylene as a main component, hydrogen constituting the material is substituted by halogen. Accordingly, when the high-intensity laser beam is irradiated thereon, a nucleus of hydrogen (proton), which is lighter in weight than that of deuterium (deuteron), is never emitted forward, which enables to emit deuteron efficiently.

### (First Embodiment of Deuteron Generating Target Apparatus)

Fig. 7 is a view showing a construction of a rotary deuteron generating target apparatus as a first embodiment of a deuteron generating target apparatus according to the present invention. The disk-shaped deuteron generating targets 1-2 according to the aforementioned first and second embodiments are applicable to the deuteron generating target apparatus 5 according to the first example. The rotary deuteron generating target apparatus 5 includes: for example, a deuteron generating target 1 shown in Fig. 2; a supporting member 210 (holder) and a deuteron generating target bracing 220 for holding the target 1 at a predetermined plane (a plane orthogonal to the rotation axis in the first example); a driving mechanism 271 (motor) for rotating the supporting member 210; and a rotating rod 230 coupled with the driving mechanism 271. Further, as a displacement means for displacing the supporting member 210 in a linear direction, there is provided a driving mechanism 272 (motor), a motion converter 240, and a shaft 250.

As specifically explaining the rotary deuteron generating target apparatus 5 according to the first embodiment, a ring-shaped deuteron generating target bracing 220 is coaxially annexed at the supporting member 210, and a thin circular film-shaped deuteron generating target 1 is coaxially held between the supporting member 210 and deuteron generating target bracing 220. A high-intensity laser beam 300 is irradiated from a laser source 350 to the deuteron generating target 1 in the perpendicular direction (from the right direction of the drawing).

A rotating rod 230 to be rotated in the direction of arrow A3 by means of the driving mechanism 271 is rotatably supported by a forked bearing mechanism 260, and the supporting member 210 is fixed at the end of the rotating rod 230. Therefore, the deuteron generating target 1 pinched between the supporting member 210 and deuteron generating target bracing 220 can be rotated in the direction of arrow A3 by means of the driving mechanism 271.

The base of the forked bearing mechanism 260 is fixed at a stage 270 capable of reciprocating linear disposition in the direction of arrow A4. The shaft 250 is fitted to the motion converter 240 for driving the stage 270, and when the shaft 250 is rotated in the direction of arrow A5 by the driving mechanism 272, the supporting member 210 and deuteron generating target bracing 220 are displaced in the direction of arrow A4 that is perpendicular to the central axis.

The operation of the rotary-type deuteron generating target apparatus 5 will next be explained.

The high-intensity laser beam 300, irradiated to the deuteron generating target 1, for example, having a pulse energy of 120 J, a pulse width of 0.9-1.2 ps, a wavelength of 1.053 µm and the like is converged on a spot diameter of 6µm at a beam density of 10²⁰ W/cm² in vacuum (approximately 10⁻⁵ Torr) by means of an off-axis parabolic mirror (for instance, 1800 mm in diameter, focal length of 450 mm). When the high-intensity laser beam 300 is irradiated to the deuteron generating target 1, high-speed deuterons are discharged forward and backward of the traveling direction of the beam. When a nuclear reaction substance (for instance, ¹⁰B) is disposed in a direction that is discharged by the high-speed deuterons, a radioactive isotope (¹¹C) is produced by a nuclear reaction (¹⁰B(d, n)¹¹C). In the case, when ¹⁴N is disposed in place of ¹⁰B, a positron discharge nucleus ¹⁵O is produced by a ¹⁴N(d, n)¹⁵O reaction.

In such a way, when the high-intensity laser beam 300 is irradiated to the deuteron generating target 1, a hole H1 is opened at the irradiation area of the high-intensity laser beam in the deuteron generating target 1, so that the same irradiated area cannot be reused. For this reason, the driving mechanism 271 next rotates the deuteron generating target 1 in the direction of arrow A3 by a given angle (30 degree/second), and the motion converter 240 displaces the stage 270 in the direction of arrow A4 by a given distance (0.1 mm/second), if necessary. In such a way, the irradiated area of the high-intensity laser beam 300 in the deuteron generating target 1 is displaced coaxially or spirally. Thus, when the irradiated area of the high-intensity laser beam 300 in the deuteron generating target 1 is displaced coaxially or spirally, the same deuteron generating target 1 can be used over a plurality of times consecutively.

### (Second Embodiment of Deuteron Generating Target Apparatus)

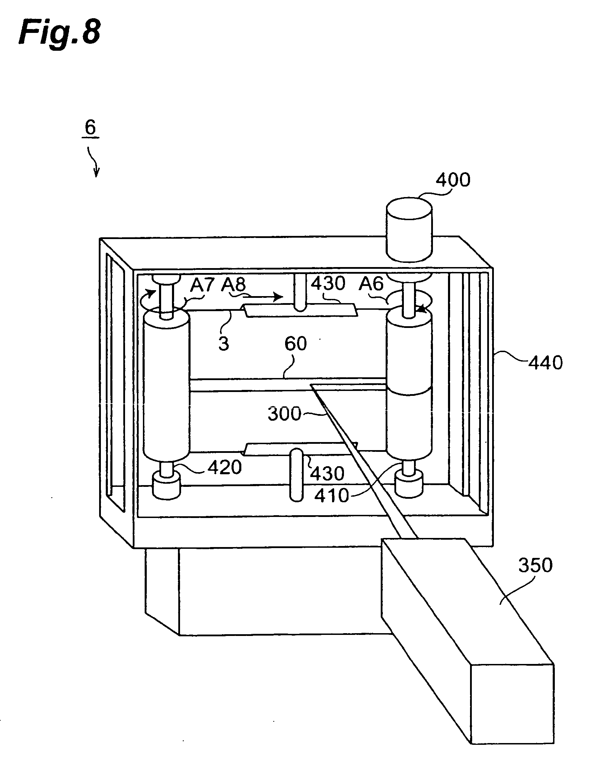

Fig. 8 is a view showing a construction of a winding-up deuteron generating target apparatus as a second embodiment of a deuteron generating target apparatus according to the present invention. The tape-shaped deuteron generating targets 3-4 according to the aforementioned third and fourth embodiments are applicable to the deuteron generating target apparatus 6 according to the second embodiment. The winding-up deuteron generating target apparatus 6 includes: for example, a deuteron generating target 3 shown in Fig. 4; and a guide portion 430 (holder) for holding the target 3 on a predetermined surface (a surface parallel to the longitudinal direction of the guide portion 430). In addition, as a means for displacing the deuteron generating target 3, the target 6 includes: a winding-up mechanism 410 for winding up the deuteron generating target 3; a driving mechanism 400 (motor), coupled to the winding-up mechanism 410, for rotating this mechanism 410; and a feeding mechanism 420 for feeding the deuteron generating target 3.

As specifically explaining the winding-up deuteron generating target apparatus 6 according to the second embodiment, guide portions 430 having a V-shape groove are mounted to be opposite to each other at the respective approximate middle portions of the upper and lower insides of a frame 440 having a rectangular frame, and the deuteron generating target 3 is movably held by means of the two V-shape grooves. A high-intensity laser beam 300 is irradiated from a laser source 350 to the deuteron generating target 3 in a perpendicular direction thereto.

The winding-up mechanism 410 has a cylindrical shaft, and one end of the cylindrical shaft is rotatably fitted to the frame 440, while the other end thereof is coaxially coupled to the rotational shaft of the driving mechanism 400. In addition, one end of the tape-shaped deuteron generating target 3 is fixed at this shaft, the winding-up mechanism 410 is rotated in the direction of arrow A6 by driving of the driving mechanism 400, and then the deuteron generating target 3 is wound up. In such a way, the irradiation area of the laser beam 300 at the deuteron generating target 3 is displaced in the direction of arrow A8.

The feeding mechanism 420 has a cylindrical shaft, and the two ends of the shaft are rotatably fitted to the frame 440. In addition, the other end of the tape-shaped deuteron generating target 3 is fixed at this shaft, the deuteron generating target 3 is wound up when the winding-up mechanism 410 is rotated by driving of the driving mechanism 400, and thereby the shaft is rotated in the direction of arrow A7. In such a way, the deuteron generating target 3 is fed in the direction of arrow A8.

Application of the wind-up deuteron generating target apparatus 6 (first embodiment) shown in Fig. 8 could also provide the same operations and effects as that of the rotary deuteron generating target 6 in Fig. 7 (second embodiment).

Namely, in the wind-up deuteron generating target apparatus 6 shown in Fig. 8, when the high-intensity laser beam 300 is irradiated to the deuteron generating target 3, a hole is opened at the irradiated area, so that the same irradiated area cannot be reused. For this reason, the driving mechanism 400 is driven to rotate the winding-up mechanism in the direction of arrow A6, thereby displacing the deuteron generating target 3 in the direction of arrow A8 by a given length (10 mm/second). Thus, a new irradiation area is set. In such a way, when the deuteron generating target 3 is wound up, the same deuteron generating target 3 becomes usable continuously.

Further, also when the deuteron generating target 4 (fourth embodiment) in which a target area 70 is formed in consecutive spots is applied to the winding-up deuteron generating target apparatus 6 shown in Fig. 8, the same operations and effects are rendered.

The high-intensity laser beam 300 from the laser source 350 is repeatedly operated at a repetitive frequency of 10 Hz, for example, the deuteron generating target 4 is wound up by a length between adjacent centers of the consecutive target areas 70 during one period of the repetitive operation. In this way, when the wining-up speed of the generating target 4 is synchronized with the repetitive frequency of the high-intensity laser beam 300, the high-intensity laser beam 300 can be irradiated to only the spot-shaped target area 70 impregnated by deuterated polystyrene. In this case, since the target material don't have to be applied to the area that is not irradiated by the high-intensity laser beam 300, there is a remarkable effect such that the target material can be used efficiently.

### INDUSTRIAL APPLICABILITY

As described above, in accordance with the present invention, a deuteron generating target capable of generating deuterons efficiently and a deuteron generating target apparatus using the same may be provided.

## Claims

1. A deuteron generating target (1) comprising:
a base film (10); and
an upper film (20) provided on said base film (10) and mainly composed of a deuterated organic compound; **characterized in that** the base film (10) is mainly composed of a halogen-containing organic compound.

2. A deuteron generating target (2, 3, 4) comprising a base film (30, 50) **characterized in that** the base film (30, 50) is mainly composed of halogen-containing organic compound and is, porous, and **in that** a deuterated organic compound is impregnated in at least part (40, 60, 70) of said porous base film (30, 50).

3. A deuteron generating target (1, 2, 3, 4) according to claim 1 or claim 2, wherein said halogen-containing organic compound is fluorine-substituted hydrocarbon.

4. A deuteron generating target apparatus (5, 6) comprising:
a deuteron generating target (1, 2, 3, 4) according to any one of claims 1 to 3;
a holder (210, 430) holding said deuteron generating target (1, 2, 3, 4) on a predetermined surface;
a laser source (350) irradiating said deuteron generating target (1, 2, 3, 4) with a laser beam (300) to a predetermined area of said deuteron generating target (1, 2, 3, 4); and
a driving mechanism (271, 400) moving said deuteron generating target (1, 2, 3, 4) on said predetermined surface so as to change a relative position of the laser beam-irradiated area on said deuteron generating target (1, 2, 3, 4) with respect to said laser source (350).

## Patentansprüche

1. Deuteronen-bildendes Target (1), das aufweist:
einen Trägerfilm (10); und
einen oberen Film (20), der auf dem Trägerfilm (10) ausgebildet ist und hauptsächlich aus einer deuterierten organischen Verbindung zusammengesetzt ist; **dadurch gekennzeichnet, dass** der Trägerfilm (10) hauptsächlich aus einer halogenhaltigen organischen Verbindung zusammengesetzt ist.

2. Deuteronen-bildendes Target (2, 3, 4), das einen Trägerfilm (30, 50) aufweist, **dadurch gekennzeichnet, dass** der Trägerfilm (30, 50) hauptsächlich aus einer halogenhaltigen organischen Verbindung zusammengesetzt ist und porös ist und dass zumindest ein Teil (40, 60, 70) des Trägerfilms (30, 50) mit einer deuterierten organischen Verbindung imprägniert ist.

3. Deuteronen-bildendes Target (1, 2, 3, 4) nach Anspruch 1 oder 2, wobei die halogenhaltige organische Verbindung ein mit Fluor substituierter Kohlenwasserstoff ist.

4. Deuteronen-bildende Targetvorrichtung (5, 6), die aufweist:
ein Deuteronen-bildendes Target (1, 2, 3, 4) nach einem der Ansprüche 1 bis 3;
eine Halterung (210, 430), die das Deuteronen-bildende Target (1, 2, 3, 4) an einer vorgegebenen Oberfläche hält;
eine Laserquelle (350) zum Bestrahlen des Deuteronen-bildenden Targets (1, 2, 3, 4) mit einem Laserstrahl (300) auf einem vorgegebenen Bereich des Deuteronen-bildenden Targets (1, 2, 3, 4); und
einen Antriebsmechanismus (271, 400) zum Bewegen des Deuteronen-bildenden Targets (1, 2, 3, 4) auf der vorgegebenen Oberfläche, um die relative Position des mit dem Laserstrahl bestrahlten Bereichs auf dem Deuteronen-bildenden Target (1, 2, 3, 4) in Bezug auf die Laserquelle (350) zu verändern.

## Revendications

1. Cible de génération de deutérons (1) comprenant :
un film de base (10) ; et
un film supérieur (20) réalisé sur ledit film de base (10) et constitué essentiellement d'un composé organique deutéré ; **caractérisée en ce que** le film de base (10) est essentiellement constitué d'un composé organique contenant de l'halogène.

2. Cible de génération de deutérons (2, 3, 4) comprenant un film de base (30, 50), **caractérisée en ce que** le film de base (30, 50) est essentiellement constitué du composé organique contenant de l'halogène et est poreux, et **en ce qu'**un composé organique deutéré est imprégné dans au moins une partie (40, 60, 70) dudit film de base poreux (30, 50).

3. Cible de génération de deutérons (1, 2, 3, 4) selon la revendication 1 ou la revendication 2, dans lequel ledit composé organique contenant de l'halogène est un hydrocarbure fluor-substitué.

4. Appareil cible de générateur de deutérons (5, 6) comprenant :
une cible de génération de deutérons (1, 2, 3, 4) selon l'une quelconque des revendications 1 à 3 ;
un support (210, 430) retenant ladite cible de génération de deutérons (1, 2, 3, 4) sur une surface prédéterminée ;
une source laser (350) irradiant ladite cible de génération de deutérons (1, 2, 3, 4) avec un faisceau laser (300) sur une zone prédéterminée de ladite cible de génération de deutérons (1, 2, 3, 4) ; et
un mécanisme d'entraînement (271, 400) déplaçant ladite cible de génération de deutérons (1, 2, 3, 4) sur ladite surface prédéterminée de manière à changer une position relative de la zone irradiée par le faisceau laser sur ladite cible de génération de deutérons (1, 2, 3, 4) relativement à ladite source laser (350).
